# EUROPÄISCHE PATENTSCHRIFT

(11) **EP 1 795 986 B1**
(45) Veröffentlichungstag und Bekanntmachung des Hinweises auf die Patenterteilung: **01.04.2015**
(21) Anmeldenummer: 06121778.2
(22) Anmeldetag: 05.10.2006
(51) Int. Cl.: A01D 41/127, A01B 69/00, A01B 79/00, G05D 1/02, A01D 41/12, A01D 43/06, A01D 91/00, G01C 21/20

(54) **Routenplanungssystem für landwirtschaftliche Arbeitsmaschinen**
Route planning system for agricultural work machines
Système de planification de route pour machines agricoles

(30) Priorität: 08.12.2005 DE 102005059003
(43) Veröffentlichungstag der Anmeldung: 13.06.2007
(73) Patentinhaber: CLAAS Selbstfahrende Erntemaschinen GmbH, 33428 Harsewinkel (DE)
(72) Erfinder: Brunnert, Andreas, 33129 Delbrück (DE); Diekhans, Dr. Norbert, 33335 Gütersloh (DE)

(56) Entgegenhaltungen:
- EP-A2- 1 602 267
- WO-A1-00/35265
- DE-A1- 19 629 618

## Beschreibung

Die Erfindung betrifft ein Routenplanungssystem für landwirtschaftliche Arbeitsmaschinen nach dem Oberbegriff des Anspruchs 1.

Aus der DE 196 29 618 ist ein Routenplanungssystem für Mähdrescher bekannt geworden, welches in dem ermittelten Routenplan die Positionen des Mähdreschers anzeigt in der der Korntank des Mähdreschers voraussichtlich gefüllt sein wird. Zur Bestimmung des Korntankbefüllgrades werden die Informationen von sogenannten Durchsatz- oder Füllstandssensoren ausgewertet und unter Berücksichtigung des Korntankvolumens auf einen in der Zukunft liegenden Zeitpunkt der vollständigen Befüllung des Korntanks approximiert. Derartige Systeme haben insbesondere den Nachteil, dass sie die jeweilige Abtankposition auf Basis fest vorgegebener Fahrtrouten des Routenplanungssystems bestimmen. Weicht der Mähdrescher von diesen vordefinierten Fahrtrouten ab, weil beispielsweise Hindernissen ausgewichen werden muss, kann das System keine sinnvolle Abtankposition mehr angeben, da sich der Mähdrescher dann auf Fahrtrouten bewegt, die das Routenplanungssystem nicht kennt. Zudem lassen derartige Systeme keine Interaktionen zwischen einer Vielzahl von Mähdreschern und diesen zugeordneten Abtankfahrzeugen zu.

Demgegenüber offenbart die WO 00/35265 ein Maschinenmanagementsystem welches die Ernte- und Transporttätigkeiten einer Vielzahl von Erntemaschinen und Ladefahrzeugen überwacht und koordiniert. In einer Ausführungsform ist ein Berechnungsalgorithmus vorgesehen, der die Position des Mähdreschers bestimmt, in der der Korntank voraussichtlich gefüllt sein wird. Diese voraussichtliche Überladeposition wird an ein sogenanntes Abtankfahrzeug übermittelt, sodass dieses sich bereits an die voraussichtliche Abtankposition bewegen kann. Der wesentliche Nachteil derartiger Systeme ist darin zu sehen, dass die geometrische Lage des voraussichtlichen Abtankpunktes allein in Abhängigkeit von dem ermittelten Durchsatz und/oder dem Korntankfüllstand ermittelt wird und geographische Bedingungen der Erntefläche unberücksichtigt bleiben. Dies kann dazu führen, dass für die Abtankposition ein Punkt im Gelände bestimmt wird an dem das Abtankfahrzeug nicht in die notwendige Position zum Mähdrescher bringbar ist. Solche Situationen ergeben sich immer dann, wenn der vorausberechnete Abtankpunkt am Feldende liegt oder in einen von Hindernissen, wie Telegraphenmasten oder Bäumen versperrten Bereich fällt. In diesen Fällen versagt die Koordinierungsfunktion und die Fahrer der Maschinen müssen in konventioneller Weise ihre Positionen auf Sicht abstimmen.

Aus der EP 1 602 267 A2 ist ein Routenplanungssystem für landwirtschaftliche Arbeitsmaschinen bekannt, wobei der landwirtschaftlichen Arbeitsmaschine eine definierte Arbeitsbreite zur Generierung von Fahrtrouten in einem Territorium zugeordnet ist, und das Routenplanungssystem eine dynamische Anpassung der geplanten Route an sich ändernde äußere Bedingungen umfasst, wie das Umfahren von Hindernissen, um den Betreiber der landwirtschaftlichen Arbeitsmaschine weitgehend von aufwendigen Lenkmanövern zu entlasten.

Es ist deshalb Aufgabe der Erfindung die beschriebenen Nachteile des Standes der Technik zu vermeiden und ein Routenplanungssystem vorzuschlagen, welches flexibel sich ändernde äußere Bedingungen berücksichtigt.

Diese Aufgabe wird erfindungsgemäß durch die kennzeichnenden Merkmale des Anspruchs 1 gelöst.

Indem die von einer Erntegutspeichereinheit aufgenommene Erntegutmenge in Abhängigkeit von wenigstens einem charakteristischen Parameter bilanziert wird und die Bilanzierung dynamisch an Änderungen des wenigstens einen charakteristischen Parameters angepasst wird, ist sichergestellt, dass das Routenplanungssystem flexibel an sich ändernde Bedingungen anpassbar ist.

In vorteilhafter Ausgestaltung der Erfindung werden die charakteristischen Parameter von erntegutspezifischen und/oder ernteflächenspezifischen und/oder maschinenspezifischen Parametern gebildet, sodass die den Ernteprozess beeinflussenden Randbedingungen umfassend berücksichtigt werden können, sodass letztlich ein effizienter Einsatz der eingebundenen Maschinensysteme gewährleistet ist.

In einer weiteren vorteilhaften Ausgestaltung der Erfindung wird die von der Erntegutspeichereinheit aufgenommene Erntegutmenge durch Sensoren erfasst, wobei die von den Sensoren generierten erntegutmengenspezifischen Signale in einer Auswerteinheit mit zumindest einem von der Auswerteinheit bereitgestellten charakteristischen Parameter korreliert werden und wobei die Auswerteinheit eine die Erntegutmenge bilanzierende Information generiert. Eine derartige Struktur hat vor allem den Vorteil, dass die dynamische Bilanzierung mit bewährten und einfach aufgebauten technischen Mitteln umgesetzt werden kann.

Ein großer wirtschaftlicher Effekt wird mit dem erfindungsgemäßen Routeuplanungssystem dann erreicht, wenn die von der Auswerteinheit generierte, die Erntegutmenge bilanzierende Information die zu erwartenden Ernteguterträge und/oder der zu erwartenden Abtankpunkt und/oder ein Abtankzeitpunkt und/oder eine Reststrecke in der die Erntegutmenge aus der Erntegutspeichereinheit gefördert wird urnfasst, da diese Größen einen maßgeblichen Einfluss auf einen kontinuierlichen Ernteprozess mit geringen abtankbedingten Stillstandszeiten haben.

Eine besonders effiziente Ausgestaltung der Erfindung ergibt sich dann, wenn die Bilanzierung die Ermittlung der momentanen Korntankbefüllung und die Prognostizierung der geographischen Lage eines Abtankpunktes in einem Routenplanungssystem unter Berücksichtigung zumindest eines ernteflächenspezifischen Parameters umfasst. Dies hat insbesondere den Vorteil, dass geographische Beschränkungen des zu bearbeitenden Territoriums umfassend berücksichtigt werden können, sodass einerseits der Abtankprozess bei fahrendem Mähdrescher erfolgen kann und andererseits bei stehendem Abtankfahrzeug dessen Position so wählbar ist, dass der Mähdrescher einen wenig Lenkmanöver erfordernden schnellen Zugang zum Abtankfahrzeug hat.

In einer weiteren vorteilhaften Ausgestaltung der Erfindung ermittelt die Auswerteinheit zumindest unter Berücksichtigung des Befüllgrades der Erntegutspeichereinheit, des ermittelten Abtankpunktes, der Position zumindest eines Abtankfahrzeuges und einer definierten Fahrtroute eine Abtankstrategie, die zumindest einen dieser Parameter in Abhängigkeit von den übrigen Parametern anpasst

Eine besonders vorteilhafte Ausgestaltung der Erfindung ergibt sich dann, wenn die Bilanzierung in Abhängigkeit von der zu erwartenden Erntegutmenge die Bereitstellung der noch erforderlichen Abtankkapazität umfasst. Auf diese Weise kann sichergestellt werden, dass stets eine ausreichende Abtankkapazität verfügbar ist und unproduktive Wartezeiten vermieden werden.

In einer vorteilhaften Ausgestaltung ist die Bereitstellung der erforderlichen Abtankkapazität als Verweildauerbilanzierung in der Weise ausgebildet, dass in Abhängigkeit von dem Befüllgrad der Erntegutspeichereinheit und/oder dem ermittelten Abtankpunkt zumindest ein die Abtankkapazität bildendes Abtankfahrzeug zwischen einer Vielzahl von landwirtschaftlichen Arbeitsmaschinen unter Berücksichtigung eines Optimierungskriteriums zur Aufnahme von Erntegut wechselt. Dies hat den Vorteil, dass die in dem zu bearbeitenden Territorium verfügbare Abtankkapazität optimal zwischen den abzutankenden Mähdreschern pendeln kann, ohne das Stillstandzeiten der Mähdrescher verursacht werden.

Indem das Optimierungskriterium "kurze Fahrwege des Abtankfahrzeugs auf dem zu bearbeitenden Territorium" und/oder "optimale Befüllung des Abtankfahrzeugs" und/oder "Priorisierung der anzufahrenden landwirtschaftlichen Arbeitsmaschine" ist, wird sichergestellt, dass unter Gesichtspunkten der Bedenschonung eine niedrige Überrollung des zu bearbeitenden Territoriums und geringe Stillstandszeiten der Maschinensysteme eintritt.

In einer vorteilhaften Weiterbildung der Erfindung wird die Steuerung eines oder mehrerer Abtankfahrzeuge automatisch in Abhängigkeit von einem ermittelten Abtankpunkt vorgenommen. Dies hat den Vorteil, dass die Abtankfahrzeuge hochflexibel und schnell auf die Befüllzustände eines oder mehrerer Mähdrescher reagieren können.

Eine besonders vorteilhafte Ausgestaltung ergibt sich dann, wenn die zumindest eine landwitischaftliche Arbeitsmaschine und das zumindest eine Abtankfahrzeug jeweils über wenigstens eine graphische Anzeige zur Visualisierung des ermittelten Abtankpunktes verfügen. In einem solchen Fall, kann auf einfache Weise eine direkte Kommunikation zwischen den in einem Territorium zusammenarbeitenden Fahrzeugen ermöglicht werden.

Damit der Fahrer schnell die für ihn relevanten Informationen des erfindungsgemäßen Routenplanungssystems erfassen kann, umfasst die graphische Anzeige die Darstellung von Fahrspuren, wobei die Fahrspuren in Abhängigkeit von Fahrspureigenschaften unterschiedlich strukturiert sind. In diesem Zusammenhang ergibt sich eine besonders übersichtliche Anzeige dann, wenn die graphische Anzeige der Fahrspuren zumindest die Darstellung der abgearbeiteten Fahrspur und der in Abhängigkeit von dem ermittelten Abtankpunkt noch abarbeitbaren Fahrspur umfasst. In diesem Fall erhält der Fahrer des Mähdreschers eine unmittelbare Information über die Restreichweite einer Erntefahrt bis zum nächsten Abtanken.

In vorteilhafter Ausgestaltung der Erfindung können die erntegutspezifischen Parameter die Erntegutart, die Erntegutfeuchte, den Erntegutdurchsatz, den Korndurchsatz, das Korn-Stroh-Verhältnis oder eine Kombination aus diesen erntegutspezifischen Parametern umfassen. Eine umfassende Berücksichtigung verschiedenster Randbedingungen wird auch dann erreicht, wenn die ernteflächenspezifischen Parameter die Feldgeometrie, Fahrtrouten eines Routenplanungssystems, Hangneigungen, die Position von Hindernissen oder eine Kombination aus diesen ernteflächenspezifischen Parametern beinhalten. Gleiches gilt auch wenn die maschinenspezifischen Parameter den Befüllgrad der Erntegutspeichereinheit, die der Erntegutspeichereinheit zugeführte Erntegutmenge, die aus der Erntegutspeichereinheit abgeführte Erntegutmenge, spezifische Informationen über wenigstens ein Ladefahrzeug oder eine Kombination aus diesen maschinenspezifischen Parametern umfassen.

Indem weiter die Anzeige der Fahrspuren dynamisch an sich ändernde Randbedingungen angepasst werden kann, wird sichergestellt, dass der Fahrer des jeweiligen Maschinensystems stets über aktuelle Änderungen informiert ist.

In einer vorteilhaften Ausgestaltung der Erfindung werden der Abtankpunkt, der Abtankzeitpunkt und die Reststrecke alternativ oder in Kombination in einer Anzeigeeinheit visualisiert und dynamisch an die sich ergebenden Änderungen angepasst. Dies hat insbesondere den Vorteil, dass der Fahrer der landwirtschaftlichen Arbeitsmaschine übersichtlich strukturierte Informationen über den Abtankprozess erhält, die ihn in die Lage versehen Änderungen einerseits schnell zu erfassen und möglicherweise dann einzugreifen, wenn dies die äußeren Umstände erfordern,

Weitere vorteilhafte Ausführungen sind Gegenstand weiterer Unteranspruche und werden nachfolgend an Hand eines in mehreren Figuren dargestellten Ausführungsbeispiels beschrieben. Es zeigen:
- Fig. 1: das erfindungsgemäße Routenplanungssystem an einer Mähdrescher - Abtankfahrzeug - Kombination in der Draufsicht
- Fig. 2: eine schematische Darstellung eines Mähdreschers in der Seitenansicht
- Fig. 3: eine schematische Detaildarstellung des erfindungsgemäßen Routenplanungssystems

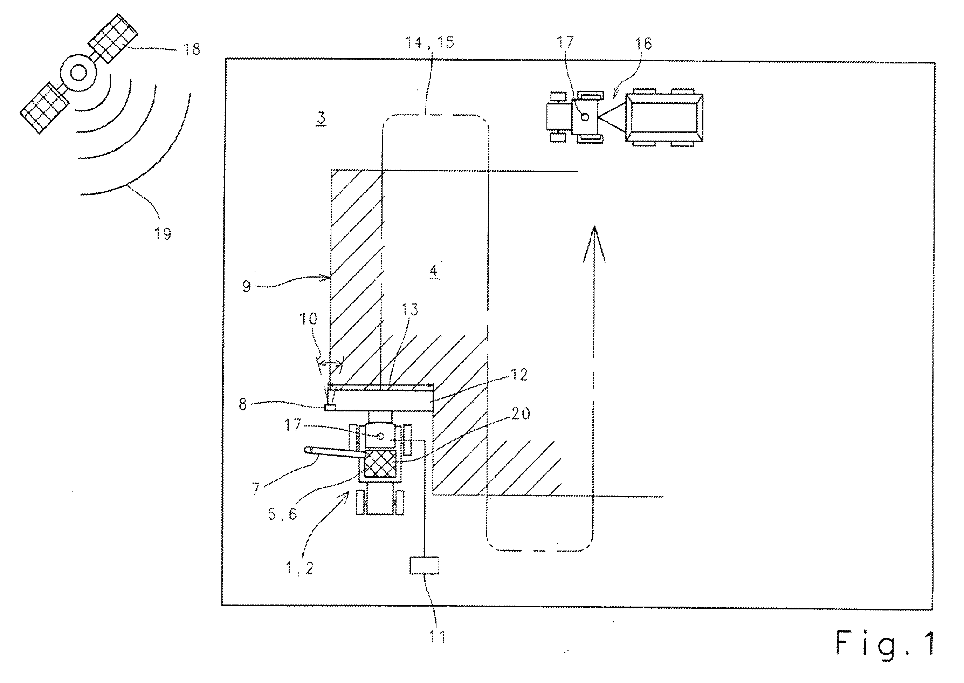

Fig. 1 zeigt eine als Mähdrescher 2 ausgeführte landwirtschaftliche Arbeitsmaschine 1 während der Ernte eines auf einem zu bearbeitenden Territorium 3 wachsenden Bestandes 4. In an sich bekannter Weise verfügt der Mähdrescher 2 über eine das geerntete Korn aufnehmende, als Korntank 5 ausgebildete Erntegutspeichereinheit 6 sowie eine Abtankeinrichtung 7 über die der Korntank 5 entleert werden kann. Frontseitig ist dem Mähdrescher 2 eine Bestandskantendetektionseinrichtung 8 zugeordnet, welche die sogenannte Bestandskante 9 des abzuerntenden Bestandes 4 detektiert. In an sich bekannter Weise kann die Bestandskantendetektionseinrichtung 8 als sogenannter Lasersensor ausgebildet sein, dessen oszillierender Detektionsstrahl 10 in einer dem Mähdrescher 2 zugeordneten Auswerteinheit 11 die Position der Bestandskante 9 generiert und unter Berücksichtigung der von der Breite des Vorsatzgerätes 12 bestimmten Arbeitsbreite 13 des Mähdreschers 2 sogenannte Fahrtrouten 14 des erfindungsgemäßen und noch näher zu beschreibenden Routenplanungssystems 15 generiert. Zur Entleerung des Korntanks 5 arbeitet der Mähdrescher 2 zudem mit einem Abtankfahrzeug 16 zusammen, wobei sich entweder der Mähdrescher 2 zur Entleerung zum Abtankfahrzeug 16 oder umgekehrt das Abtankfahrzeug 16 zum Mähdrescher 2 begibt. Es ist auch denkbar, dass der Mähdrescher 2 und das Abtankfahrzeug 16 über eine GPS-Antenne 17 verfügen, die in an sich bekannter Weise von Satellitensystemen 18 genenierte GPS-Signale 19 an eine Auswerteinheit 11 übermittelt, wobei in der Auswerteinheit 11 ebenfalls in Abhängigkeit von der Arbeitsbreite 13 des Mähdreschers 2 Fahrrouten 14 des erfindungsgemäßen Routenplanungssystems 15 generiert werden. Es liegt im Rahmen der Erfindung, dass die Bestandskantendetektionseinrichtung 8 und das GPS-basierte System 17-19 auch an beliebig ausgeführten landwirtschaftlichen Arbeitsmaschinen 1 angeordnet sein können. Aus Vereinfachungsgründen wird die Erfindung nachfolgend im wesentlichen an Hand des komplexen Systems Mähdrescher 2 erläutert, wobei die Erfindung nicht auf diesen beschränkt sein soll.

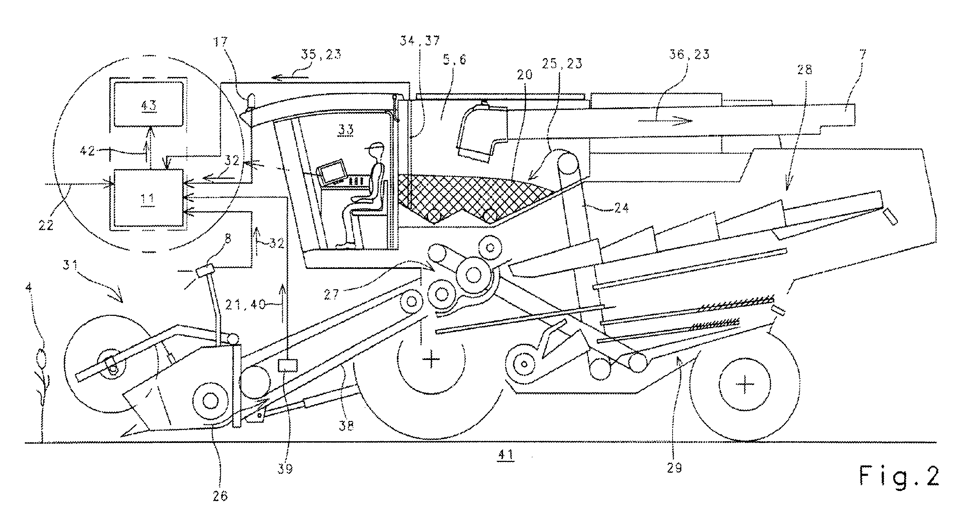

In erfindungsgemäßer Weise soll die von der jeweiligen Erntegutspeichereinheit 6 aufgenommene Erntegutmenge 20 in noch näher zu beschreibender Weise in Abhängigkeit von sogenannten charakteristischen Parametern bilanziert werden und wobei die Bilanzierung in noch näher zu beschreibender Weise dynamisch an Änderungen des oder der charakteristischen Parameter angepasst wird. Die charakteristischen Parameter der Bilanzierung können dabei erntegutspezifische Parameter 21, ernteflächenspezifische Parameter 22 und/oder maschinenspezifische Parameter 23 umfassen. Gemäß Fig. 2 verfügt der Mähderscher 2 über eine als Korntank 5 ausgeführten Erntegutspeichereiriheit 6, der über eine Elevatoreinheit 24 ein Körnerstrom 25 zugeführt wird. Dieser Körnerstrom 25 wird in an sich bekannter und deshalb nicht im Detail erläuterter Weise aus einem Erntegutstrom 26 herausgelöst, wobei hierfür der Erntegutstrom 26 in der Regel sogenannte Dreschorgane 27, Trennorgane 28 und Reinigungsorgane 29 durchläuft. Der Erntegutstrom 26 wird durch Abernten und Zusammenführen eines gewachsenen Erntegutbestandes 4 in einem Schneidwerk 31 generiert. Weiter verfügt der in Fig. 2 dargestellte Mähdrescher 2 über die bereits beschriebene Bestandskantendetektionsvorrichtung 8 und das GPS-System 17 welche in an sich bekannter Weise Bestandskanten- sowie Fahrtroutensignale 32 generieren. Aus Vereinfachungsgründen sind beide Systeme 8, 17 an ein und dem selben Mähdrescher 2 dargestellt. Üblicherweise kann der Mähdrescher 2 auch nur mit einer dieser Systeme 8, 17 ausgestattet sein. Die generierten Bestandskanten- sowie Fahrtroutensignale 32 werden an die in der Regel in der Fahrerkabine 33 angeordnete Auswerteinheit 11 übermittelt. Zudem verfügt der Korntank 5 über eine an sich bekannte Füllstandsdetektiereinrichtung 34, welche ein Korntankfüllstandssignal 35 generiert und ebenfalls an die Auswerteinheit 11 übermittelt Es liegt im Rahmen der Erfindung, dass die Füllstandsdetektiereinrichtung 34 auch als eine den Korndurchsatz messende Sensoreinrichtung ausgebildet ist, wobei die Durchsatzsensoren sowohl in den Kornelevator 24 als auch in die Abtankeinrichtung 7 integriert sind. In diesem Fall würde sich der Füllstand des Korntanks 7 aus der Differenz zwischen dem zugeführten Körnerstrom 25 und dem über die Abtankeinrichtung 7 aus dem Korntank 5 abgeführten Körnerstrom 36 ergeben. Im dargestellten Ausführungsbeispiel bildet somit die Füllstandsdetektiereinrichtung 34 die erfindungsgemäßen Sensoren 37 zur Ermittlung der von dem Korntank 5 aufgenömmenen Erntegutmenge 20, wobei die von der Füllstandsdetektiereintichtung 34 generierten Korntankfüllstandssignale 25, 35, 36 zugleich erfindtingsgemäß die maschinenspezifischen Parameter 23 bilden, Dem das Schneidwerk 31 aufnehmenden Schrägförderorgan 38 des Mähdreschers 2 ist eine an sich bekannte und deshalb nicht näher beschriebene Durchsatz- und Feuchtemesseinrichtung 39 zugeordnet, die den in den Schrägförderer 38 eintretenden Erntegutstrom 26 hinsichtlich Durchsatz und Feuchtegehalt detektiert, Die von der Durchsatz- und Feuchtemesseinrichtung 39 generierten Durchsatz- und Feuchtesignale 40 werden ebenfalls an die Auswerteineinheit 11 Übermittelt und bilden zugleich erfindungsgemäß die erntegutspezifischen Parameter 21. Es wäre aber auch denkbar, dass die erntegutspezifischen Parameter 21 die Emtegutart sein kann, wobei diese Information dann entweder unmittelbar von dem Betreiber des Mähdreschers 2 in die Auswerteinheit 11 eingegeben wird oder die Auswerteinheit 11 diese Information von externen Datenquellen automatisch bezieht Weiter liegt es im Rahmen der Erfindung, dass die Auswerteinheit 11 über sogenannte ernteflächenspezifische Parameter 22 wie etwa die Geometrie des zu bearbeitenden Territoriums 3, die von dem Mähdrescher 2 oder einem Routenplanungssystem 15 generierten Fahrtrouten 14. Neigungen des zu befahrenden Bodens 41 sowie die Position von Hindernissen verfügen kann. Auch bezüglich der ernteflächenspezifischen Parameter 22 kann es so sein, dass die besagten Parameter 22 entweder von dem Betreiber des Mähdreschers 2 eingegeben oder von externen Quellen bezogen werden. Zudem liegt es im Rahmen der Erfindung, dass die Auswerteinheit 11 von den verfügbaren Parametern 21-23 nur eine Auswahl oder Kombination bestimmter Parameter 21-23 berücksichtigt. Die Auswerteinheit 11 ist jedoch zumindest so strukturiert, dass sie neben den Korntankfüllstandssignalen 25, 35, 36 zumindest einen weiteren charakteristischen Parameter 21-23 berücksichtigt und aus dessen Korrelation mit den Korntankfüllstandssignalen 25, 35, 36 zumindest eine die von dem Korntank 5 aufgenommene Erntegutmenge 20 bilanzierende Information 42 generiert. Im einfachsten Fall kann die bilanzierende Information 42 eine Prognose bezüglich zu erwartender Ernteguterträge oder die Ermittlung einer sogenannten und im folgenden noch näher zu beschreibenden Abtankposition des Mähdreschers 2, in der die Erntegutmenge 20 aus dem Korntank 5 mittels der Abtankeinrichtung 7 herausgefördert wird. Zur besseren Visualisierung der generierten, die Erntegutmenge 20 bilanzierenden Informationen 42 verfügt die Auswerteinheit 11 zudem über eine Anzeigeeinheit 43.

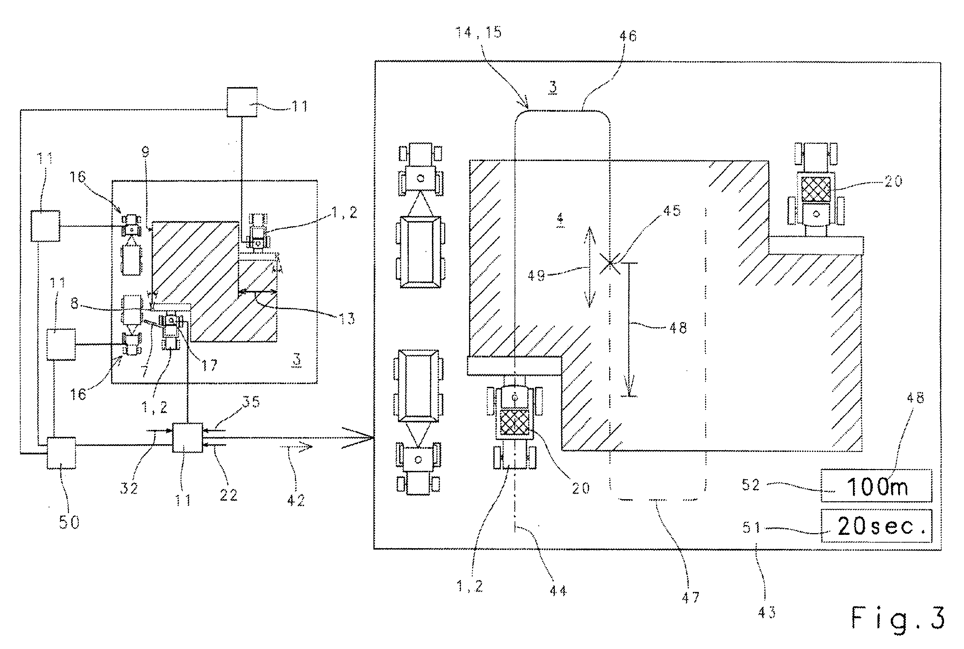

Fig. 3 zeigt das erfindungsgemäße Routenplanungssystein 15 im Detail, wobei aus Vereinfachungsgründen die Erfindung im wesentlichen an Hand der stark vergrößert dargestellten Anzeigeeinheit 43 beschrieben wird. In der Anzeigeeinheit 43 befindet sich der Mähdrescher 2 auf einer Erntefahrt in dem Bestand 4, wobei die Ausrichtung des Mähdreschers 2 an der Bestandskante 9 entweder mittels der Bestandskantendetektionsvorrichtung 8 oder mittels GPS-Antenne 17 GPS-basiert erfolgen kann. In Abhängigkeit von den Fahrtroutensignalen 32 wird in der Auswerteinheit 11 eine erste Fahrspur 44 generiert, die im dargestellten Ausführungsbeispiel strichpunktiert in der Anzeigeeinheit 43 abgebildet wird. Mithin haftete dieser Fahrspur 44 die Eigenschaft an, dass sie die bereits von dem Mähdrescher 2 zurückgelegte Erntestrecke repräsentiert. In der bereits beschriebenen Weise generieren geeignete Systeme zumindest ein Korntankfüllstandssignal 35 aus welchem in der Auswerteinheit 43 eine die Erntegutmenge 20 bilanzierende Information 42 generiert wird. Im dargestellten Fall umfasst die Information 42 die Lage eines Abtankpunktes 45 in dem zu bearbeitenden Territorium 3. In der Anzeigeeinheit 43 wird die Fahrstrecke bis zu diesem Abtankpunkt 45 durch eine durchgezogen ausgeführte Fahrspur 46 visualisiert. Die nach erreichen des Abtankpunktes 45 abzuarbeitende Fahrtroute 14 kann beispielsweise gestrichelt dargestellt sein, sodass auch bei dieser weiteren Fahrspur 47 die Eigenschaft durch eine besondere graphische Gestaltung visualisiert wird. Da der Überladeprozess in der Regel so abruft, dass entweder das Abtankfahrzeug 16 zum Mähdrescher 2 oder der Mähdrescher 2 zum Abtankfahrzeug 16 fährt, um den Korntank 5 zu entleeren, muss sichergestellt sein, dass entweder das Überiadefahrzeug 16 den fahrenden Mähdrescher 2 begleiten kann oder das Überladefahrzeug 16 so positioniert ist, dass der Mähdrescher 2 das Überladefahrzeug 16 erreichen und in dieses überladen kann. In erfindungsgemäßer Weise soll dies dadurch sichergestellt werden, dass bei der Generierung der die Erntegutmenge 20 bilanzierenden Information 42 zumindest ein ernteflächenspezifischer Parameter 22 berücksichtigt wird. Im vorliegenden Fall kann dies beispielsweise die erforderliche Reststrecke 48 sein, die benötigt wird, damit der Korntank 5 bei fahrendem Mähdrescher 2 vollständig entleert werden kann, ohne dass das Abtankfahrzeug mit Hindernissen kollidiert oder das Ende des Bestandes 4 oder des Territoriums 3 erreicht wird. Auf diese Weise wird ein kontinuierlicher Abtankprozess erreicht, der unproduktive Stillstandszeiten im Abtankprozess des Mähdreschers 2 reduziert oder nahezu vollständig vermeidet. Es liegt im Rahmen der Erfindung, dass die Position des Abtankpunktes 45 und damit die Inhalte der generierten Information 42 dynamisch an sich ändernde Korntankfüllstandssignale 35, emtegut-, ernteflächen- und maschinenspezifische Parameter 21-23 anpassbar ist, das heißt, die Lage des Abtankpunktes 45 kann sich gemäß Pfeilrichtung 49 dynamisch verschieben, sodass auch die Lage der generierten Fahrspuren 46, 47 dynamisch änderbar ist.

In einer Ausgestaltung der Erfindung kann neben oder an Stelle der Bestimmung des Abtankpunktes 45 ein Abtankzeitpunkt 51 ermittelt und in der Anzeigeeinheit 43 visualisiert werden. Im einfachsten Fall wird der Abtankzeitpunkt 51 dadurch ermittelt, dass aus der Fahrgeschwindigkeit des Mähdreschers 2 und der Zunahme der Erntegutmenge 20 im Korntank 5 in der Auswerteinheit 11 der Abtankzeitpunkt, 51 bestimmt wird. Wegen der allmählichen Zunahme der Erntegutmenge 20 im Korntank 5 läuft der angezeigte Abtankzeitpunkt 51 sukzessive gegen Null, Zudem liegt es im Rahmen der Erfindung, dass die sogenannte Reststrecke 48, in der Mähdrescher 2 voraussichtlich zum Abtanken benötigt numerisch in einem Anzeigefenster 52 angezeigt wird. Im einfachsten Fall ermittelt die Auswerteinheit 11 aus der Fahrgeschwindigkeit des Mähdreschers 2, der im Korntank 5 befindlichen Erntegutmenge 20 und der Fördergeschwindigkeit der Abtankeinnchtung 7 die Länge der Reststrecke 48. Auch dieser Wert passt sich dynamisch an den momentanen Füllstand des Korntanks 5 an. Weiter liegt im Rahmen der Erfindung, dass die Reststrecke 48, der Abtankzeitpunkt 51 und der Abtankpunkt 45 alternativ oder gemeinsam in der Anzeigeeinheit 43 anzeigbar sind. Da sowohl die Bestimmung des Abtankpunktes 45 als auch des Abtankzeitpunktes 51 und der Reststrecke 48 auf den Füllstand des Korntanks 5 bezogen ist, prognostiziert die Auswerteinheit 11 zunächst den Befüllgrad "Korntank voll" an Hand des ermittelten Kornertrages, wobei dieser in an sich bekannter Weise aus der Fahrgeschwindigkeit des Mähdreschers 2, dessen Arbeitsbreite 13 und dem pro Zeiteinheit ermittelten, in den Korntank 5 geförderten Körnerstrom 25 bestimmt wird. In Abhängigkeit von dem weiteren, in den Korntank 5 geförderten Körnerstrom 25 und dem gegebenenfalls aus diesem abgeförderten Körnerstrom 36 bilanziert die Auswerteinheit 1 schließlich aktualisierte Werte für den Abtankpunkt 45, den Abtankzeitpunkt 51 und die Reststrecke 48.

Da sich ein optimaler Abtankprozess insbesondere dadurch auszeichnet, dass der Bestand 4 kontinuierlich abgeerntet wird und die in den Ernteprozess eingebundenen Fahrzeugsysteme aus Gründen der Bodenschonung möglichst wenig auf dem zu bearbeitenden Territorium bewegt werden, kann das erfindungsgemäße Routenplanungssystem 15 zudem so ausgestaltet sein, dass die Auswerteinheit 11 zumindest unter Berücksichtigung des Befüllgrades des Korntankes 5, des ermittelten Abtankpunktes 45, der Position zumindest eines Abtankfahrzeuges 16 und einer ermittelten Fahrtroute 14 eine Abtankstrategie definiert, die zumindest einen dieser Parameter in Abhängigkeit von den übrigen Parametern anpasst. Dies hat insbesondere den Vorteil, dass das Routenplanungssgstem 15 alle wesentlichen Einflussfaktoren einer sogenannten Ernteprozesskette berücksichtigt.

Zudem kann die erfindungsgemäße Bilanzierung so ausgestaltete sein, dass die generierte Information 42 die in dem bearbeiteten Bestand 4 noch zu erwartende Erntegutmenge 20 und die dafür erforderliche Kapazität an Abtankfahrzeugen 16 umfasst. Dies könnte in dem dargestellten Ausführungsbeispiel so ausgestaltet sein, dass mehrere Mähdrescher 2 in dem gleichen Territorium 3 eingesetzt sind und die Bilanzierung der Abtankkapazität die Verweildauer des Abtankfahrzeugs 16 bei einem gerade abzutankenden Mähdrescher 2 berücksichtigt. Auf diese Weise wird für eine Vielzahl von in dem gleichen Territorium 3 eingesetzten Mähdreschern 2 sichergestellt, dass die Abtankkapazität so verteilt wird, dass ein Stillstand der Mähdrescher 2 sowie schwer oder gar nicht zugängliche Abtankpositionen vermieden werden. Diese sogenannte Verweildauerbilanzierung kann zudem ein Optimierungskriterium berücksichtigen. Wie bereits beschrieben kann das Optimierungskriterium "kurze Fahrwege des Abtankfahrzeugs 16 auf dem zu bearbeitenden Territorium 3" und/oder "optimale Befüllung des Abtankfahrzeugs 16" und/oder "Priorisierung der anzufahrenden landwirtschaftlichen Arbeitsmaschine 1" sein.

Gemäß Fig. 3 können in den Ernteprozess eine Vielzahl von Mähdreschern 2 und Abtankfahrzeugen 16 involviert sein, wobei es im Rahmen der Erfindung liegt, dass weitere landwirtschaftliche Arbeitsmaschinen 1 in die Prozesskette integriert sein können. Indem jeder Mähdrescher 2 und jedes Abtankfahrzeug 16 über eine Auswerteinheit 11 mit zugehöriger Anzeigeeinheit 43 verfügt und jede der Auswerteinheiten 11 über eine Zentraleinheit 50, die entweder auf einem der beteiligten Fahrzeuge 1, 2, 16 oder stationär an einer zentralen Stelle angeordnet ist, in Kontakt stehen, kann die Steuerung eines oder mehrerer Abtankfahrzeuge 16 automatisch in Abhängigkeit von einem oder mehreren generierten Abtankpunkten 45 vorgenommen werden. Dieses aufeinander abgestimmte Bewegen der Abtankfahrzeuge 16 und Mähdrescher 2 auf einem zu bearbeitenden Territorium 3 kann auch dadurch noch optimiert werden, wenn jede der Auswerteinheiten 11 eine Anzeigeeinheit 43 aufweist, in der auch die übrigen in das erfindungsgemäße Routenplanungssystem 15 eingebundenen Fahrzeuge 1, 2 16 angezeigt werden.

Es liegt im Rahmen des Könnens eines Fachmanns das beschriebene Routenplanungssystem 15 in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: landwirtschaftliche Arbeitsmaschine
- 2: Mähdrescher
- 3: Territorium
- 4: Bestand
- 5: Korntank
- 6: Erntegutspeichereinheit
- 7: Abtankeinrichtung
- 8: Bestandskantendetektionseinrichtung
- 9: Bestandskante
- 10: Detektionsstrahl
- 11: Auswerteinheit
- 12: Vorsatzgerät
- 13: Arbeitsbreite
- 14: Fahrtroute
- 15: Routenplanungssystem
- 16: Abtankfahrzeug
- 17: GPS-Antenne
- 18: Satellitensystem
- 19: GPS-Signal
- 20: Erntegutmenge
- 21: erntegutspezifischer Parameter
- 22: emteflächenspezifischer Parameter
- 23: maschinenspezifischer Parameter
- 24: Elevatoreinheit
- 25: Körnerstrom
- 26: Erntegutstrom
- 27: Dreschorgane
- 28: Trennorgane
- 29: Reinigungsorgane
- 30:
- 31: Schneidwerk
- 32: Fahrtroutensignal
- 33: Fahrerkabine
- 34: Füllstandsdetektiereinrichtung
- 35: Korntankfüllstandssignal
- 36: Körnerstrom
- 37: Sensor
- 38: Schrägförderorgan
- 39: Feuchtemesseinrichtung
- 40: Feuchtesignal
- 41: Boden
- 42: Information
- 43: Anzeigeeinheit
- 44: Fahrspur
- 45: Abtankpunkt
- 46: Fahrspur
- 47: Fahrspur
- 48: Reststrecke
- 49: Pfeilrichtung
- 50: Zentraleinheit
- 51: Abtankzeitpunkt
- 52: Anzeigefenster

## Patentansprüche

1. Routenplanungssystem für landwirtschaftliche Arbeitsmaschinen, wobei der landwirtschaftlichen Arbeitsmaschine eine definierte Arbeitsbreite zur Generierung von Fahrtrouten in einem Territorium zugeordnet ist und die landwirtschaftliche Arbeitsmaschine zumindest eine Erntegutspeichereinheit zur Aufnahme von Erntegutmengen umfasst und die Erntegutmenge auf Abtankfahrzeuge überladbar ist,
**dadurch gekennzeichnet**,
dass zur Bilanzierung einer von einer Erntegutspeichereinheit (6) aufgenommene Erntegutmenge (20) in Abhängigkeit von wenigstens einem charakteristischen Parameter (21-23) Durchsatzsensoren in Kornelevator (24) und Abtankeinrichtung (7) der landwirtschaftlichen Arbeitsmaschine integriert sind, wobei die Bilanzierung dynamisch an Änderungen des wenigstens einen charakteristischen Parameters (21-23) anpassbar ist.

2. Routenplanungssystem für landwirtschaftliche Arbeitsmaschinen nach Anspruch 1, **dadurch gekennzeichnet**,
dass die charakteristischen Parameter erntegutspezifische Parameter (21) und/oder ernteflächenspezifische Parameter (22) und/oder maschinenspezifische Parameter (23) sind.

3. Routenplanungssystem für landwirtschaftliche Arbeitsmaschinen nach einem der vorhergehenden Ansprüche, **dadurch gekennzeichnet**,
dass die von der Erntegutspeichereinheit (6) aufgenommene Erntegutmenge (20, 25) durch Sensoren (37) erfasst wird und die von den Sensoren (37) generierten erntegutmengenspezifischen Signale (35) in einer Auswerteinheit (11) mit zumindest einem von der Auswerteinheit (11) bereitgestellten charakteristischen Parameter (21-23) korreliert werden und wobei die Auswerteinheit (11) eine die Erntegutmenge (20) bilanzierende Information (42) generiert.

4. Routenplanungssystem für landwirtschaftliche Arbeitsmaschinen nach einem der vorhergehenden Ansprüche, **dadurch gekennzeichnet**,
dass die die Erntegutmenge (20) bilanzierende Information (42) zu erwartende Ernteguterträge und/oder den zu erwartenden Abtankpunkt (45) und/oder einen Abtankzeitpunkt (51) und/oder eine Reststrecke (48) in der die Erntegutmenge aus der Erntegutspeichereinheit (6) gefördert wird umfasst.

5. Routenplanungssystem für landwirtschaftliche Arbeitsmaschinen nach einem der vorhergehenden Ansprüche, **dadurch gekennzeichnet**,
dass die Bilanzierung die Ermittlung der momentanen Korntankbefüllung (20) und die Prognostizierung der geographischen Lage eines Abtankpunktes (45) in einem Routenplanungssystem (15) unter Berücksichtigung zumindest eines ernteflächenspezifischen Parameters (22) umfasst.

6. Routenplanungssystem für landwirtschaftliche Arbeitsmaschinen nach einem der vorhergehenden Ansprüche, **dadurch gekennzeichnet**,
dass die Auswerteinheit (11) zumindest unter Berücksichtigung des Befüllgrades der Erntegutspeichereinheit (6), des ermittelten Abtankpunktes (45), der Position zumindest eines Abtankfahrzeuges (16) und einer ermittelten Fahrtroute (14) eine Abtankstrategie ermittelt, die zumindest einen dieser Parameter in Abhängigkeit von den übrigen Parametern anpasst.

7. Routenplanungssystem für landwirtschaftliche Arbeitsmaschinen nach einem der vorhergehenden Ansprüche, **dadurch gekennzeichnet**,
dass die Bilanzierung in Abhängigkeit von der zu erwartenden Erntegutmenge die Bereitstellung der noch erforderlichen Abtankkapazität umfasst.

8. Routenplanungssystem für landwirtschaftliche Arbeitsmaschinen nach Anspruch 7, **dadurch gekennzeichnet**,
dass die Bereitstellung der erforderlichen Abtankkapazität als Verweildauerbilanzierung in der Weise ausgebildet ist, dass in Abhängigkeit von dem Befüllgrad der Erntegutspeichereinheit (6) und/oder dem ermittelten Abtankpunkt (45) zumindest ein die Abtankkapazität bildendes Abtankfahrzeug (16) zwischen einer Vielzahl von landwirtschaftlichen Arbeitsmaschinen (1, 2) unter Berücksichtigung eines Optimierungskriteriums zur Aufnahme von Erntegut wechselt.

9. Routenplanungssystem für landwirtschaftliche Arbeitsmaschinen nach Anspruch 8, **dadurch gekennzeichnet**,
dass das Optimierungskriterium "kurze Fahrwege des Abtankfahrzeugs (16) auf dem zu bearbeitenden Territorium (3)" und/oder "optimale Befüllung des Abtankfahrzeugs (16)" und/oder "Priorisierung der anzufahrenden landwirtschaftlichen Arbeitsmaschine (1, 2)" ist.

10. Routenplanungssystem für landwirtschaftliche Arbeitsmaschinen nach einem der vorhergehenden Ansprüche, **dadurch gekennzeichnet**,
dass die Steuerung eines oder mehrerer Abtankfahrzeuge (16) automatisch in Abhängigkeit von zumindest einem ermittelten Abtankpunkt (45) vorgenommen wird.

11. Routenplanungssystem für landwirtschaftliche Arbeitsmaschinen nach einem der vorhergehenden Ansprüche, **dadurch gekennzeichnet**,
dass die zumindest eine landwirtschaftliche Arbeitsmaschine (1, 2) und das zumindest eine Abtankfahrzeug (16) jeweils über wenigstens eine graphische Anzeigeeinheit (43) zur Visualisierung des ermittelten Abtankpunktes (45) verfügen.

12. Routenplanungssystem für landwirtschaftliche Arbeitsmaschinen nach einem der vorhergehenden Ansprüche, **dadurch gekennzeichnet**,
dass die graphische Anzeigeeinheit (43) die Darstellung von Fahrspuren (44, 46, 47) umfasst, wobei die Fahrspuren (44, 46, 47) in Abhängigkeit von Fahrspureigenschaften unterschiedlich strukturiert sind.

13. Routenplanungssystem für landwirtschaftliche Arbeitsmaschinen nach Anspruch 12, **dadurch gekennzeichnet**,
dass die graphische Anzeige der Fahrspuren (44, 46, 47) zumindest die Darstellung der abgearbeiteten Fahrspur (44) und der in Abhängigkeit von dem ermittelten Abtankpunkt (45) noch abarbeitbaren Fahrspur (46) umfasst.

14. Routenplanungssystem für landwirtschaftliche Arbeitsmaschinen nach einem der vorhergehenden Ansprüche, **dadurch gekennzeichnet**,
dass die erntegutspezifischen Parameter (21) die Erntegutart, die Erntegutfeuchte, den Erntegutdurchsatz, den Korndurchsatz, das Korn-Stroh-Verhältnis oder eine Kombination aus diesen erntegutspezifischen Parametern (21) umfassen.

15. Routenplanungssystem für landwirtschaftliche Arbeitsmaschinen nach einem der vorhergehenden Ansprüche, **dadurch gekennzeichnet**,
dass die ernteflächenspezifischen Parameter (22) die Feldgeometrie, Fahrtrouten (14) eines Routenplanungssystems (15), Hangneigungen, die Position von Hindernissen oder eine Kombination aus diesen ernteflächenspezifischen Parametern (22) umfassen.

16. Routenplanungssystem für landwirtschaftliche Arbeitsmaschinen nach einem der vorhergehenden Ansprüche, **dadurch gekennzeichnet**,
dass die maschinenspezifischen Parameter (23) der Befüllgrad der Erntegutspeichereinheit (5, 6), die der Erntegutspeichereinheit (5, 6) zugeführte Erntegutmenge (25), die aus der Erntegutspeichereinheit (5, 6) abgeführte Erntegutmenge (36), spezifische Informationen über wenigstens ein Abtankfahrzeug (16) oder eine Kombination aus diesen maschinenspezifischen Parametern (23) umfassen.

17. Routenplanungssystem für landwirtschaftliche Arbeitsmaschinen nach einem der vorhergehenden Ansprüche, **dadurch gekennzeichnet**,
dass die Anzeige der Fahrspuren (14, 44, 46, 47) dynamisch an sich ändernde Randbedingungen angepasst wird.

18. Routenplanungssystem für landwirtschaftliche Arbeitsmaschinen nach einem der vorhergehenden Ansprüche, **dadurch gekennzeichnet**,
dass der Abtankpunkt (45), der Abtankzeitpunkt (51) und die Reststrecke (48) alternativ oder in Kombination in einer Anzeigeeinheit (43) visualisierbar sind.

19. Routenplanungssystem für landwirtschaftliche Arbeitsmaschinen nach einem der vorhergehenden Ansprüche, **dadurch gekennzeichnet**,
dass der Abtankpunkt (45), der Abtankzeitpunkt (51) und die Reststrecke (48) dynamisch anpassbar sind.

## Claims

1. A route planning system for agricultural working machines, wherein associated with the agricultural working machine is a defined working width for generating travel routes in a territory and the agricultural working machine includes at least one crop material storage unit for receiving quantities of crop material and the quantity of crop material can be transferred on to tank discharge vehicles,
**characterised in that** through-put sensors are integrated in grain elevator (24) and tank discharge device (7) of the agricultural working machine for assessing a quantity of crop material (20) received by a crop material storage unit (6) in dependence on at least one characteristic parameter (21-23), wherein the assessing operation can be dynamically adapted to changes in the at least one characteristic parameter (21-23).

2. A route planning system for agricultural working machines according to claim 1 **characterised in that** the characteristic parameters are crop material-specific parameters (21) and/or crop area-specific parameters (22) and/or machine-specific parameters (23).

3. A route planning system for agricultural working machines according to one of the preceding claims **characterised in that** the quantity of crop material (20, 25) received by the crop material storage unit (6) is detected by sensors (37) and the crop material quantity-specific signals (35) generated by the sensors (37) are correlated in an evaluation unit (11) with at least one characteristic parameter (21-23) provided by the evaluation unit (11) and wherein the evaluation unit (11) generates an item of information (42) assessing the quantity of crop material (20).

4. A route planning system for agricultural working machines according to one of the preceding claims **characterised in that** the item of information (42) assessing the quantity of crop material (20) includes crop material yields to be expected and/or the tank discharge point (45) to be expected and/or a tank discharge time (51) and/or a remaining section (48) in which the quantity of crop material is conveyed out of the crop material storage unit (6).

5. A route planning system for agricultural working machines according to one of the preceding claims **characterised in that** the assessment includes ascertaining the instantaneous grain tank filling (20) and the prognostication of the geographical position of a tank discharge point (45) in a route planning system (15) having regard to at least one crop area-specific parameter (22).

6. A route planning system for agricultural working machines according to one of the preceding claims **characterised in that** the evaluation unit (11) ascertains a tank discharge strategy at least having regard to the degree of filling of the crop material storage unit (6), the ascertained tank discharge point (45), the position of at least one tank discharge vehicle (16) and an ascertained travel route (14), which tank discharge strategy adapts at least one of said parameters in dependence on the other parameters.

7. A route planning system for agricultural working machines according to one of the preceding claims **characterised in that** the assessment in dependence on the quantity of crop material to be expected includes the provision of the tank discharge capacity still required.

8. A route planning system for agricultural working machines according to claim 7 **characterised in that** the provision of the required tank discharge capacity is in the form of a residence time assessment in such a way that, in dependence on the degree of filling of the crop material storage unit (6) and/or the ascertained tank discharge point (45), at least one tank discharge vehicle (16) forming the tank discharge capacity changes between a plurality of agricultural working machines (1, 2) having regard to an optimisation criterion for receiving crop material.

9. A route planning system for agricultural working machines according to claim 8 **characterised in that** the optimisation criterion is 'short travel distances of the tank discharge vehicle (16) on the territory (3) to be worked' and/or 'optimum filling of the tank discharge vehicle (16)' and/or 'prioritisation of the agricultural working machine (1, 2) to be approached'.

10. A route planning system for agricultural working machines according to one of the preceding claims **characterised in that** control of one or more tank discharge vehicles (16) is effected automatically in dependence on at least one ascertained tank discharge point (45).

11. A route planning system for agricultural working machines according to one of the preceding claims **characterised in that** the at least one agricultural working machine (1, 2) and the at least one tank discharge vehicle (16) respectively have at least one graphical display unit (45) for displaying the ascertained tank discharge point (45).

12. A route planning system for agricultural working machines according to one of the preceding claims **characterised in that** the graphical display unit (45) includes the representation of travel tracks (44, 46, 47), wherein the travel tracks (44, 46, 47) are structured differently in dependence on travel track properties.

13. A route planning system for agricultural working machines according to claim 12 **characterised in that** the graphical display of the travel tracks (44, 46, 47) includes at least the representation of the worked travel track (44) and the travel track (46) which can still be worked in dependence on the ascertained tank discharge point (45).

14. A route planning system for agricultural working machines according to one of the preceding claims **characterised in that** the crop material-specific parameters (21) include the kind of crop material, the crop material moisture content, the crop material through-put, the grain through-put, the grain-straw ratio or a combination of those crop material-specific parameters (21).

15. A route planning system for agricultural working machines according to one of the preceding claims **characterised in that** the crop area-specific parameters (22) include the field geometry, travel routes (14) of a route planning system (15), slope inclinations, the position of obstacles or a combination of those crop area-specific parameters (22).

16. A route planning system for agricultural working machines according to one of the preceding claims **characterised in that** the machine-specific parameters (23) include the degree of filling of the crop material storage unit (5, 6), the quantity of crop material (25) fed to the crop material storage unit (5, 6), the quantity of crop material (36) discharged from the crop material storage unit (5, 6), specific information about at least one tank discharge vehicle (16) or a combination of those machine-specific parameters (23).

17. A route planning system for agricultural working machines according to one of the preceding claims **characterised in that** the display of the travel tracks (14, 44, 46, 47) is dynamically adapted to changing boundary conditions.

18. A route planning system for agricultural working machines according to one of the preceding claims **characterised in that** the tank discharge point (45), the tank discharge time (51) and the remaining section (48) can be displayed alternatively or in combination in a display unit (43).

19. A route planning system for agricultural working machines according to one of the preceding claims **characterised in that** the tank discharge point (45), the tank discharge time (51) and the remaining section (48) can be dynamically adapted.

## Revendications

1. Système de planification d'itinéraire pour machines de travail agricoles, dans lequel une largeur de travail définie est affectée à la machine de travail agricole pour la génération d'itinéraires dans un territoire, et la machine de travail agricole comprend au moins une unité de stockage de produit de récolte pour la réception de quantités de produit de récolte, et la quantité de produit de récolte peut être transbordée sur des véhicules de vidange, **caractérisé en ce que** pour établir le bilan d'une quantité de produit de récolte (20) reçue par une unité de stockage de produit de récolte (6) en fonction d'au moins un paramètre caractéristique (21-23), des capteurs de débit sont intégrés dans l'élévateur à grains (24) et dans le dispositif de vidange (7) de la machine de travail agricole, l'établissement du bilan pouvant être adapté dynamiquement aux modifications du ou des paramètres caractéristiques (21-23).

2. Système de planification d'itinéraire pour machines de travail agricoles selon la revendication 1, **caractérisé en ce que** les paramètres caractéristiques sont des paramètres spécifiques au produit de récolte (21) et/ou des paramètres spécifiques à la surface de récolte (22) et/ou des paramètres spécifiques à la machine (23) .

3. Système de planification d'itinéraire pour machines de travail agricoles selon l'une des revendications précédentes, **caractérisé en ce que** la quantité de produit de récolte (20, 25) reçue par l'unité de stockage de produit de récolte (6) est détectée par des capteurs (37), et les signaux spécifiques au produit de récolte (35) générés par les capteurs (37) sont corrélés dans une unité d'analyse (11) avec au moins un paramètre caractéristique (21-23) fourni par l'unité d'analyse (11), l'unité d'analyse (11) générant une information (42) qui permet d'établir le bilan de la quantité de produit de récolte (20).

4. Système de planification d'itinéraire pour machines de travail agricoles selon l'une des revendications précédentes, **caractérisé en ce que** l'information (42) permettant d'établir le bilan de la quantité de produit de récolte (20) comprend des rendements de produit de récolte escomptés et/ou le point de vidange (45) escompté et/ou un instant de vidange (51) et/ou une distance restante (48) sur laquelle la quantité de produit de récolte sera déchargée de l'unité de stockage de produit de récolte (6).

5. Système de planification d'itinéraire pour machines de travail agricoles selon l'une des revendications précédentes, **caractérisé en ce que** l'établissement du bilan comprend la détermination du remplissage momentané de la trémie à grains (20) et la prévision de la position géographique d'un point de vidange (45) dans un système de planification d'itinéraire (15) en tenant compte d'au moins un paramètre spécifique à la surface de récolte (22).

6. Système de planification d'itinéraire pour machines de travail agricoles selon l'une des revendications précédentes, **caractérisé en ce que** l'unité d'analyse (11) détermine, au moins en tenant compte du degré de remplissage de l'unité de stockage de produit de récolte (6), du point de vidange déterminé (45), de la position d'au moins un véhicule de vidange (16) et d'un itinéraire (14) déterminé, une stratégie de vidange qui adapte au moins un de ces paramètres en fonction des autres paramètres.

7. Système de planification d'itinéraire pour machines de travail agricoles selon l'une des revendications précédentes, **caractérisé en ce que** l'établissement du bilan comprend, en fonction de la quantité de produit de récolte escomptée, la mise à disposition de la capacité de vidange encore nécessaire.

8. Système de planification d'itinéraire pour machines de travail agricoles selon la revendication 7, **caractérisé en ce que** la mise à disposition de la capacité de vidange nécessaire est réalisée sous la forme d'un établissement de bilan de durée de séjour, de sorte qu'en fonction du degré de remplissage de l'unité de stockage de produit de récolte (6) et/ou du point de vidange (45) déterminé, au moins un véhicule de vidange (16) formant la capacité de vidange alterne entre une pluralité de machines de travail agricoles (1, 2) en tenant compte d'un critère d'optimisation pour la réception de produit de récolte.

9. Système de planification d'itinéraire pour machines de travail agricoles selon la revendication 8, **caractérisé en ce que** le critère d'optimisation est « trajets courts du véhicule de vidange (16) sur le territoire (3) à traiter » et/ou « remplissage optimal du véhicule de vidange (16) » et/ou « classement par priorité des machines de travail agricoles (1, 2) à desservir ».

10. Système de planification d'itinéraire pour machines de travail agricoles selon l'une des revendications précédentes, **caractérisé en ce que** la commande d'un ou de plusieurs véhicules de vidange (16) s'effectue automatiquement en fonction d'au moins un point de vidange (45) déterminé.

11. Système de planification d'itinéraire pour machines de travail agricoles selon l'une des revendications précédentes, **caractérisé en ce que** la au moins une machine de travail agricoles (1, 2) et le au moins un véhicule de vidange (16) disposent chacun d'au moins une unité d'affichage graphique (43) pour la visualisation du point de vidange (45) déterminé.

12. Système de planification d'itinéraire pour machines de travail agricoles selon l'une des revendications précédentes, **caractérisé en ce que** l'unité d'affichage graphique (43) comprend la représentation de voies de circulation (44, 46, 47), les voies de circulation (44, 46, 47) étant structurées différemment en fonction de propriétés de voies de circulation.

13. Système de planification d'itinéraire pour machines de travail agricoles selon la revendication 12, **caractérisé en ce que** l'affichage graphique des voies de circulation (44, 46, 47) comprend au moins la représentation des voies de circulation traitées (44) et de la voie de circulation (46) pouvant encore être traitée en fonction du point de vidange (45) déterminé.

14. Système de planification d'itinéraire pour machines de travail agricoles selon l'une des revendications précédentes, **caractérisé en ce que** les paramètres spécifiques au produit de récolte (21) comprennent la nature du produit de récolte, l'humidité du produit de récolte, le débit de produit de récolte, le débit de grains, le rapport grain-paille ou une combinaison de ces paramètres spécifiques au produit de récolte (21).

15. Système de planification d'itinéraire pour machines de travail agricoles selon l'une des revendications précédentes, **caractérisé en ce que** les paramètres spécifiques à la surface de récolte (22) comprennent la géométrie du champ, les itinéraires (14) d'un système de planification d'itinéraire (15), les déclivités, la position d'obstacles ou une combinaison de ces paramètres spécifiques à la surface de récolte (22).

16. Système de planification d'itinéraire pour machines de travail agricoles selon l'une des revendications précédentes, **caractérisé en ce que** les paramètres spécifiques à la machine (23) comprennent le degré de remplissage de l'unité de stockage de produit de récolte (5, 6), la quantité de produit de récolte (25) amenée à l'unité de stockage de produit de récolte (5, 6), la quantité de produit de récolte (36) évacuée de l'unité de stockage de produit de récolte (5, 6), des informations spécifiques sur au moins un véhicule de vidange (16) ou une combinaison de ces paramètres spécifiques à la machine (23).

17. Système de planification d'itinéraire pour machines de travail agricoles selon l'une des revendications précédentes, **caractérisé en ce que** l'affichage des voies de circulation (14, 44, 46, 47) est adapté dynamiquement à des conditions changeantes.

18. Système de planification d'itinéraire pour machines de travail agricoles selon l'une des revendications précédentes, **caractérisé en ce que** le point de vidange (45), l'instant de vidange (51) et la distance restante (48) peuvent être visualisés alternativement ou en combinaison sur une unité d' affichage (43).

19. Système de planification d'itinéraire pour machines de travail agricoles selon l'une des revendications précédentes, **caractérisé en ce que** le point de vidange (45), l'instant de vidange (51) et la distance restante (48) sont adaptables dynamiquement.
